# EUROPEAN PATENT SPECIFICATION

(11) **EP 3 472 410 B1**
(45) Date of publication and mention of the grant of the patent: **22.12.2021**
(21) Application number: 17742543.6
(22) Date of filing: 15.06.2017
(51) Int. Cl.: E04H 9/02, F16F 15/02, F16F 7/08

(54) **DISSIPATIVE DEFORMABLE PANEL**
ABLEITENDE VERFORMBARE PLATTE
PANNEAU DÉFORMABLE DISSIPATIF

(30) Priority: 17.06.2016 IT UA20164474
(43) Date of publication of application: 24.04.2019
(73) Proprietor: Universita' degli studi di Brescia, 25121 Brescia (IT)
(72) Inventor: GIURIANI, Ezio Pilar, 23022 Chiavenna (SO) (IT); COMINELLI, Stefania, 25049 Iseo (BS) (IT); PRETI, Marco, 25123 Brescia (IT)
(74) Representative: Mittler, Andrea
(86) International application number: PCT/IB2017/053561
(87) International publication number: WO 2017/216751

(56) References cited:
- WO-A2-95/17561
- US-A1- 2009 031 666
- US-A1- 2016 138 263

## Description

The present invention refers to a dissipative deformable panel. The present invention consists of a controlled deformation panel equipped with dissipative devices, which may be employed for coverings, seismic diaphragms and seismic-resistant walls.

The large amount of seismic events recorded in recent decades have highlighted the high seismic vulnerability of existing buildings, in particular masonry and prefabricated buildings. During a seismic event, the capability of a building to withstand seismic stresses without its walls detaching and, in the most serious cases, overturning thus causing the partial or total collapse of the building, is very important.

When restoring historic constructions, the issue is often raised of improving the response of the building to the seismic stresses, by arranging scaffolding and coverings, such as seismic-resistant diaphragms, properly connected to the masonry to favor the box-like behavior of the building.

Planar or ground diaphragms are structural elements forming part of the scaffolding or covering of the buildings, which also have the task, in addition to preventing the detachment of the peripheral walls under the effect of the earthquake, to redistribute the horizontal seismic action on the seismic-resistant walls. In particular, seismic diaphragms perform the task of collecting the horizontal seismic actions of all the relevant masses and transferring them to the seismic-resistant sections generally consisting of the walls oriented as the earthquake. The horizontal actions and the reactions of the seismic-resistant elements form a self-balanced force system which generates bending and shearing stresses, acting in the diaphragm plane.

In order to serves this structural function, the diaphragms must consist of elements capable of withstanding the bending and shearing action in the plane.

The bending action resistance may be provided by two peripheral bars withstanding the traction and compression forces of the torque; the bars may be made of reinforced concrete or with angle brackets or steel plates or tie-rods working with the wall structure. The shearing action requires a slab (core) entrusted with the tangential strains; it may be made of reinforced concrete or sheet steel or wooden panels.

In addition to the two bending bars and core, peripheral curbs with a distributive function are required, which have the task to direct the uniformly distributed shearing into the core and transfer it to the seismic-resistant walls.

Finally, the connections between the parts are very important for the arrangement of the diaphragm. In particular, those between diaphragm and walls affected by overturning, between bars and core, those between distributor and core, between distributor and seismic-resistant walls and those inside the core.

Diaphragms are generally designed to provide resistance as well as to ensure a rigid behavior and give the building a box-like behavior. In principle, they may be deformable as long as their stiffness is calibrated and/or their possible specific dissipative behavior is defined: in the literature, some authors have highlighted some of the advantages of deformable diaphragms, the features of which differ however from the solution offered herein.

For example, document WO2014147598A2 describes an anti-seismic device comprising a sliding edge consisting of a groove or a linear slide. A sliding element longitudinally engages the slide or groove. The sliding element is anchored to the body of a covering beam. A deformable connection element with elastoplastic features is rigidly connected to the sliding element with a support to be deformed elastoplastically as a result of a movement along the slide or groove.

In addition, document CN104389355A describes a dissipative anti-seismic system comprising a shell connected to a damper. One end of the shell is fastened to a sliding guide which is integral with an end part of a junction. The shell is connected to a runner which is equipped with a rib, in which the end part of the shell is connected to a shape memory alloy wire connected to a pre-stressing element.

Patent US9238919B2 describes a seismic isolation system comprising an isolation device connected to an end of an overlying structural element in a vertical direction. A damper is connected to the overlying structural element in a horizontal direction. A further damper is provided to attenuate the vibration of the structural element with respect to the flooring, expanding or contracting in a horizontal direction.

US2016/138263A1 describes a vertical dissipative device comprising a first element adapted to be fastened to a horizontal beam, and a second element adapted to be fastened to a vertical upright which forms part of the same dissipative device.

Said vertical upright rests on and extends from horizontal foundations.

Said horizontal beam is supported by two vertical columns between which said vertical dissipative device is interposed.

Said first element is vertically inserted into said second element.

Said device further comprises a means adapted to control the movements of the device in a horizontal direction, i.e. orthogonal to the vertical sliding plane of said first and second elements.

Disadvantageously, said anti-seismic devices may not be applied to existing structures or buildings without invasive interventions. Applying said devices would involve high costs and invasive interventions on both the building and the structural components thereof. Furthermore, such patents only relate to the dissipative device, other than that suggested herein, and do not offer systems for providing planar or covering diaphragms.

Another disadvantage is given by the fact that said devices are difficult to be applied and inadvisable on ancient buildings, such as churches and palaces, which could hardly withstand invasive interventions on masonry.

It is the object of the present invention to provide an anti-seismic dissipative device, comprising a specific dissipative device, which may also be applied to existing structures and buildings.

It is another object to achieve an anti-seismic dissipative device capable of avoiding the detachment and overturning of the outer walls of a building following seismic stresses while dissipating the energy of the earthquake.

It is a further object to have an anti-seismic dissipative device which may be applied to buildings and structures without expensive and invasive interventions on the existing masonry.

According to the invention, such objects are achieved by a device as described in claim 1.

It is a second object of the present invention to obtain a dissipative deformable panel capable of absorbing and dissipating the energy generated by a seismic event.

According to the invention, such an object is achieved by a dissipative panel as described in claim 5.

These and other features of the present invention will become more apparent from the following detailed description of a practical embodiment thereof, shown for non-limiting purposes in the accompanying drawings, in which:
Figure 1 shows a sectional view of an anti-seismic dissipative device;
Figure 2 shows a sectional view of a linear portion of the anti-seismic dissipative device;
Figure 3 shows a sectional view of a portion with bending of the anti-seismic dissipative device;
Figure 4 shows a top plan view of the anti-seismic dissipative device;
Figure 5 shows a top plan view of an anti-seismic dissipative covering;
Figure 6 shows a detail included in quadrant A in Figure 5;
Figure 7 shows a top plan view of an anti-seismic dissipative covering following a seismic event;
Figure 8 shows a sectional view of the anti-seismic dissipative device during the mounting step;
Figure 9 shows a partially sectioned perspective view of the anti-seismic dissipative device mounted to structural elements;
Figure 10 shows a diagram, Sliding force - relative displacement (quasistatic test);
Figure 11 shows a diagram, Sliding force - relative displacement (dynamic test);
Figure 12 shows a diagram, Shear force V - top displacement δ.

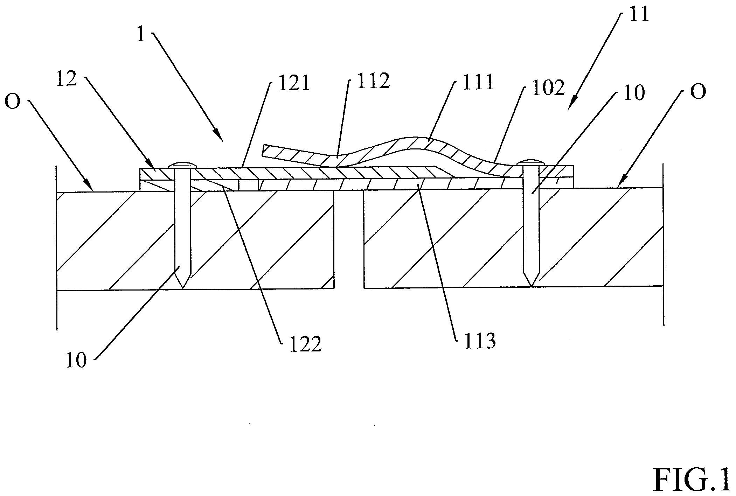

In Figure 1, a dissipative device 1 is shown, comprising a first element 11 and a second element 12. The dissipative device 1 is made of steel or of materials with equivalent or superior mechanical features.

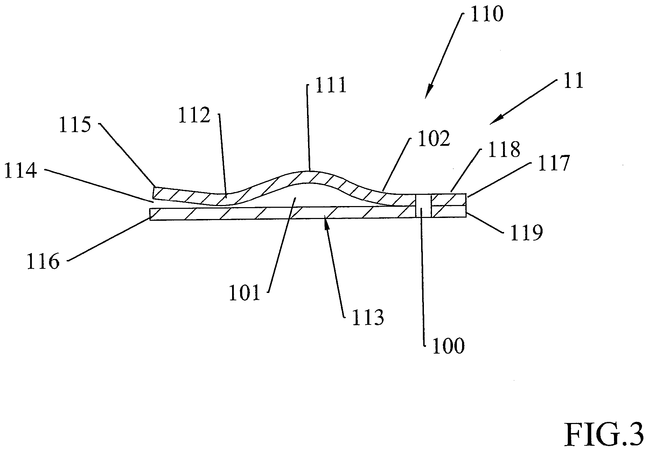

The first element 11 (Figure 3) of the dissipative device 1 comprises a portion 110 with bending and a linear portion 113, as shown in Figure 3, which are rigidly connected to each other, for example by means of welding. The portion 110 with bending has a flat part 118 and at least three bendings, a first bending 111, a second bending 112 and a third bending 102. The flat part 118 is adjacent to a first end 117, the second bending 112 is adjacent to a second end 115 while the first bending 111 is in the middle, between the third bending 102 and the second bending 112. The width of the first bending 111 is greater that the width of the second bending 112.

The linear portion 113 of the first element 11 comprises a first end 119 and a second end 116. The portion 110 with bending rests on the linear portion 113 so that the first end 117 of the portion 110 with bending and the first end 119 of the linear portion 113 are aligned with each other. The linear part 118 of the portion 110 with bending rests on the linear portion 113 while the two bendings 111 and 112 are not in contact with the linear portion 113. The second end 115 of the portion 110 with bending and the second end 116 of the linear portion 113 are not in contact with each other, thus defining an opening 114 between the two second ends 115 and 116. Between the portion 110 with bending and the linear portion 113 a compartment 101 is defined. The second bending 112, protruding towards the linear portion 113, delimits the extension of compartment 101.

The linear part 118 of the portion 110 with bending of the first element 11 comprises a series of through holes 100. Said through holes 100 are also present in the linear portion 113 of the first element 11.

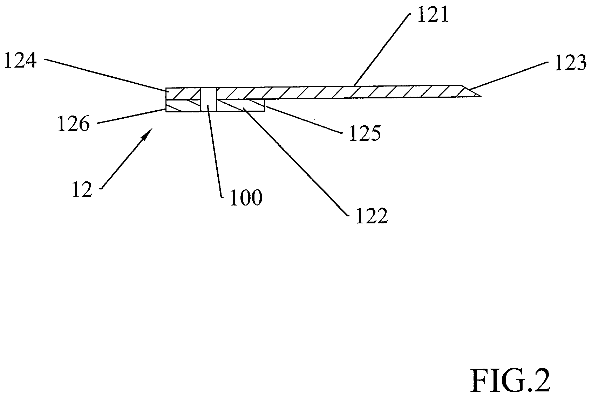

The second element 12 (Figure 2) comprises a first linear segment 121 and a second linear segment 122, rigidly connected together, for example by means of welding. Said first linear segment 121 has a first flat end 124 and a second end 123 with pointed tapered section, said first linear segment 121 reducing its thickness to cancel it while keeping the depth unchanged. The second linear segment 122 is also rectilinear in shape and comprises two flat ends 125 and 126. Said second linear segment 122 has a smaller width than the first linear segment 121.

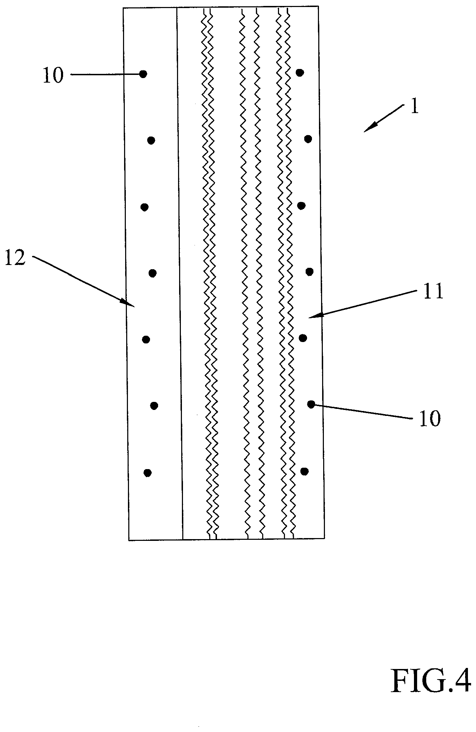

Element 11 and element 12 have an indicative length of 30 cm which is increased or reduced according to the design needs (Figure 4).

A fastening means 10, for example a nail, a screw, a wall plug or any other fastening means, is adapted to be inserted into the through openings 100 both of the first element 11 and of the second element 12 of the dissipative device 1, so as to fasten it to a structure.

Figure 1 shows the dissipative device 1: the second element 12 is forced into the first element 11 so as to activate a clamping effect on the second element 12. The second end 123 with pointed tapered section of the second element 12 is adapted to be inserted into the opening 114 of the first element 11 and to lift the portion 110 with bending coming into contact with the second bending 112. The clamping effect may be experimentally and theoretically calibrated and controlled according to the elastic deformation of the first element 11.

The clamping effect between the first element 11 and the second element 12 is adapted to generate a friction between the two elements 11, 12.

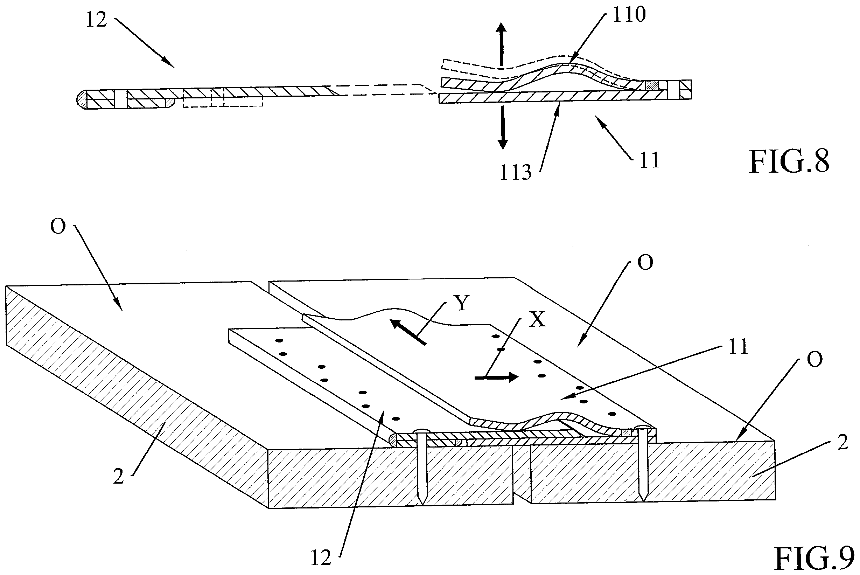

Figure 8 shows that the first element 11 deforms and opens (vertical arrows) to accommodate the second element 12, or is deformable to generate a clamping effect on the second element 12.

Said friction is given by a constraining action inside device 1 and is independent from other forces and actions outside said device 1. In particular, said friction generated by the clamping effect is independent from any action or deformation beyond a sliding plane of the second element 12 in the first element 11.

The second bending 112 is made so as to locate the contact and make the precompression force generated when the second element 12 is inserted into the first element 11 known and constant. Said pre-compression force is therefore generated by forcing the second element 12 within the first element 11 and not by the movements of the structural elements of the building or by deformations outside device 1.

The dissipative device 1 is connected to an existing structure by connecting the two elements 11 and 12 to the respective adjacent covering elements 2 by means of the through holes 100, within which the fastening means 10 is inserted.

The dissipative devices 1 may be fastened on structural elements aligned with one another according to an alignment plane O, preferably adjacent, for example covering elements 2, of a structure or building, even already existing, for example the dissipative devices 1 may be directly placed and connected to the trusses of the existing structure or along the edges of wooden panels replacing the wooden boards, in the case of historic buildings, or on roof tiles in the case of prefabricated structures, or on any other type of covering consisting of structural elements which may slide over one another.

The number of dissipative devices 1 to be inserted along the junction line between the trusses or, more generally, the elements forming the structure is defined by dimensioning the dissipative covering.

The invention of this patent application introduces the innovative aspect of not only deformable but also dissipative diaphragms. Compared to a rigid diaphragm, in the case of a deformable diaphragm, the innovation mainly concerns the diaphragm core panel, which in this case introduces the deformable and dissipative part. The dissipative property of the seismic energy introduced into the system during the earthquake is obtained by inserting the dissipative devices of the invention between the elements forming the seismic diaphragm core, which are arranged side by side so as to obtain parallel sliding lines.

As for the operation, in the case of a relative movement, in the alignment plane O, between the covering elements or the elements of the seismic diaphragm 2 placed on a structure, the second element 12 of the dissipative device 1 is adapted to slide with braking friction within the first element 11 of the dissipative device 1. The friction depends on the deformation of the first element 11 during the mounting step.

Said sliding occurs parallel to said alignment plane O, for example horizontal, of the structural elements 2.

Most of said sliding occurs in a direction Y orthogonal to a coupling (mounting) direction X of the elements 11, 12 (Figure 9).

The second bending 112 of the portion 110 with bending is adapted to rest on the first plane segment 121 of the second element 12 thus creating a friction adapted to brake the sliding in the longitudinal direction, i.e. in a direction normal to the cross section in Figure 1, of said second element 12 within the first element 11. Said friction effect is adapted to brake the sliding of said second element 12 in both longitudinal sliding directions. The first linear segment 121 of the second element is adapted to slide over the whole length of the first element 11, allowing the mutual sliding between the covering elements 2.

Said movement of the structural elements 2, for example horizontal, is controlled by the clamping effect produced by the friction between the second bending 112 of the first element and the linear segment 121 of the second element 12. Greater the clamping effect, lesser the movement of the covering elements 2. The sliding of the second element 12 within the first element 11 of the dissipative device 1 allows the deformation of the covering of the building itself.

The dissipation of the energy generated by an earthquake occurs by controlling the movement of the covering elements 2 by means of the dissipative devices 1; therefore, in this case, the diaphragm, besides being deformable, by virtue of the shear deformation of the panel obtained by means of the relative sliding of the components, is also dissipative, due to the presence of the dissipative devices 1.

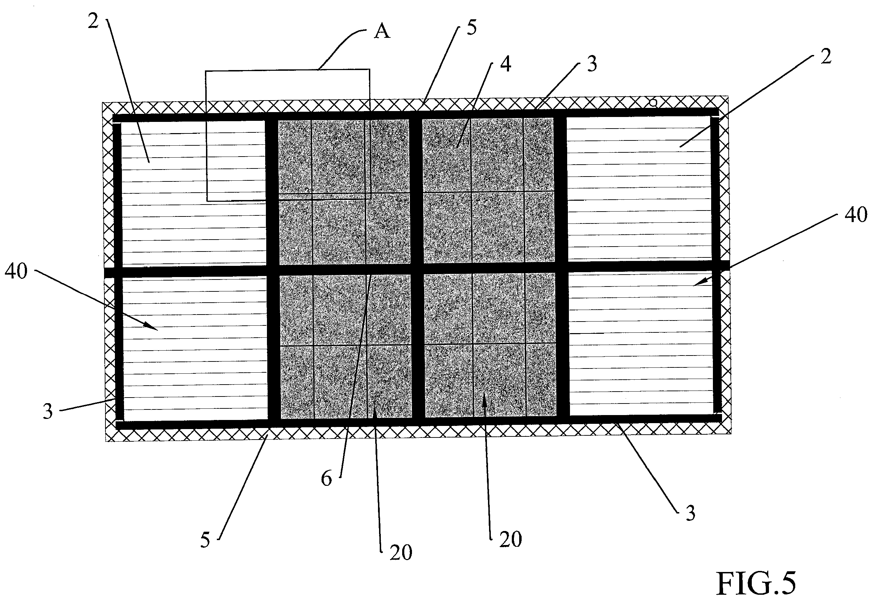

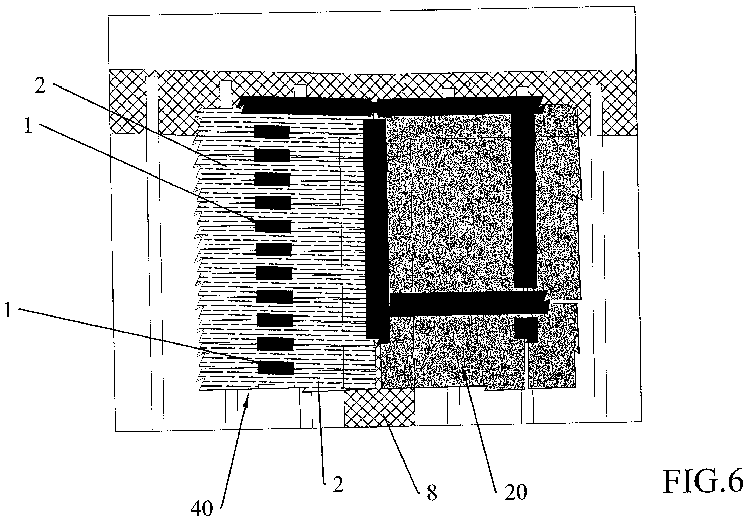

A possible use of the dissipative device 1 to obtain a deformable anti-seismic panel, for example in the case of historic buildings, is shown in Figures 5 and 6 where a church covering is shown with three diaphragm arches 8. The two end portions of the covering, adjacent to the head walls, consist of a dissipative diaphragm and therefore are deformable portions 40, while the central portion of the covering consists of a rigid paneling, and therefore is a non-dissipative portion 20.

In the deformable portion 40, the dissipative devices 1 are connected by means of nails to wooden trusses 2, connected in turn to joists 9. The dissipative diaphragm 1 is connected to the side walls 5 by means of junction elements 3 made by using steel plates. The connection to the load-bearing walls is performed with proper connections, such as vertical pins and coach screws.

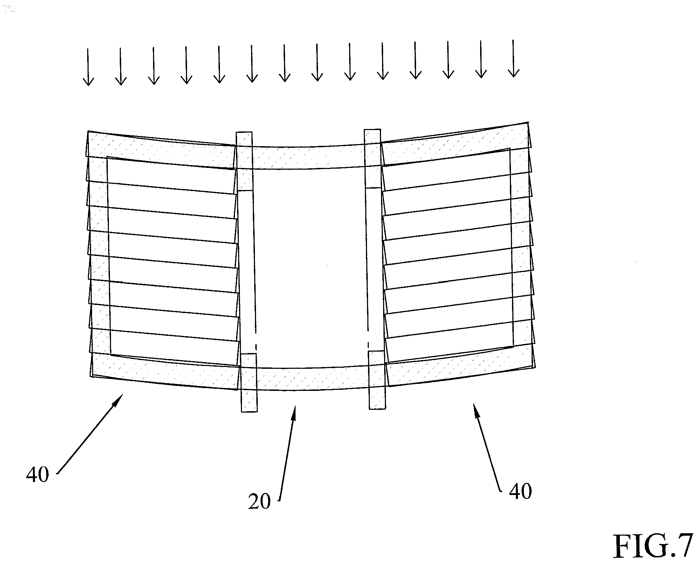

The non-dissipative portion 20 instead consists of wooden multilayer panels, connected to one another by means of riveted metal flanges 30 which achieve virtually non-deformable connections. Figure 7 shows the behavior of the dissipative diaphragm following a seismic event (indicated by the arrows). As it can be seen, the two deformable portions 10 alter their structure following the seismic stress while the non-dissipative portion 20 remains rigid.

The deformable portions 10 dissipate the energy produced by the seismic action, and since the deformable portions are connected to the side walls 5 of the building, the swaying of the side walls is damped and braked. Thereby, the side walls 5 may be avoided from overturning towards the outside of the building following a seismic event.

The deformable anti-seismic panel may be obtained by applying said device not only to coverings, but also to deformable diaphragms, to scaffoldings or to other structural elements from which a dissipation of the seismic energy can be obtained.

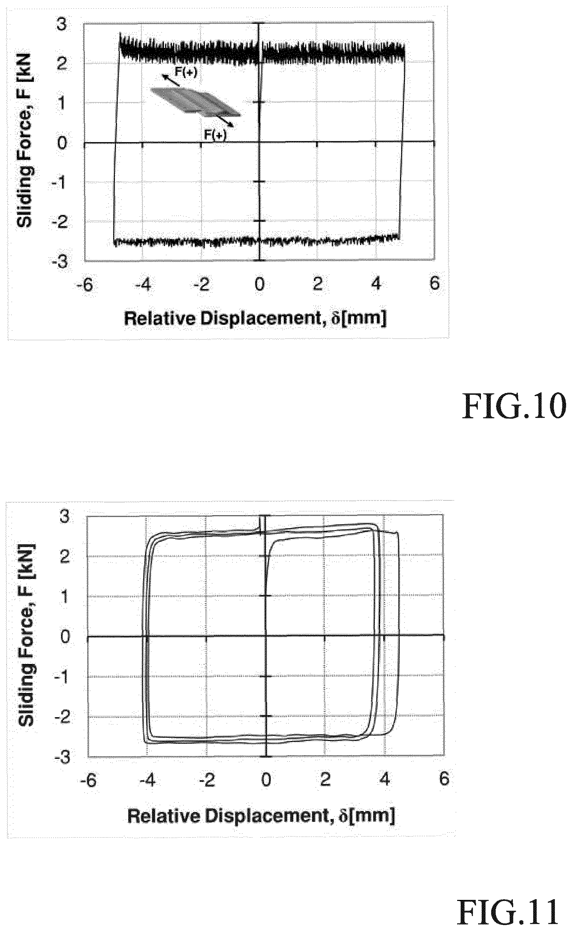

Figures 10 and 11 show some of the results obtained from experimental tests performed on the device. The tests were performed at the Pisa Laboratory for Material Testing of the University of Brescia, using a programmable testing machine of the Instron type. The device was stressed under a sliding force F under displacement control, imposing both static and dynamic load cycles.

All the cycles applied gave a perfectly plastic response. A variable sliding force from 2.5 to 2.8 kN was obtained, corresponding to a variable test speed from 5mm/min (quasistatic test, figure 10) to 36mm/s (dynamic test, figure 11), showing a stable and reliable behavior.

Such devices were applied to a 2x2m panel consisting of 10 wooden boards, representing a dissipative covering portion, containing 3 devices along the junctions. Such a dissipative diaphragm was subjected to shearing tests in the plane thereof. The shear force was applied by means of a hydraulic jack connected to a test bench. During the test, both the top displacement of the panel and the relevant sliding between the wooden panels were measured.

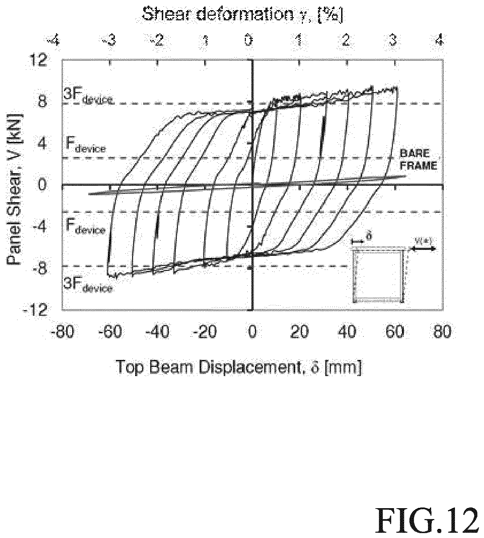

Figure 12 shows the chart of the shear force V - top displacement of the panel. The panel showed an elastic-perfectly plastic behavior, governed by the frictional dampers. The slight hardening of the curve is due to the rigidity of the test bench. The maximum shear force of each cycle (V = 8.1 kN) corresponds to the sum of the resistances offered by the dampers (Fdevice) aligned on the single sliding junction between the boards (Fdevice = 2.6 kN x 3 = 7.8 kN), confirming the reliable dimensioning of the devices.

Once reached the drift, equal to 3%, corresponding to deformations far beyond the highest deformations provided by regulations, no damage to either the wooden panels or the dampers was observed.

A first advantage is that device 1 allows to dissipate the energy of the earthquake by braking the horizontal movements and avoiding the overturning of the outer walls of the building.

A second advantage is that the dissipative device 1 may be applied to already existing structures or buildings without expensive masonry modifications.

A further advantage is that device 1 is easy and cost-effective to be manufactured.

## Claims

1. An anti-seismic dissipative device (1) comprising a first element (11) and a second element (12) fastenable to structural elements (2) of a building,
said structural elements (2) being adjacent and aligned according to an alignment plane (O) along which they are bound to move,
said first element (11) being deformable,
said second element (12) being adapted to be forced during the mounting step within said first element (11) generating a friction between the two elements (11, 12) of the device (1), said friction depending on the deformation of the first element (11) of the device (1) during the mounting step,
said second element (12) being further adapted to slide with braking friction in said first element (11) parallel to said alignment plane (O) in the case of movements in the alignment plane (O) of the structural elements (2) to which they are fastened,
**characterized in that** the first element (11) comprises a linear portion (113) and a portion (110) with bending able to generate a calibrated friction, the second element (12) comprises a first and a second linear segment (121, 122) parallel to each other and rigidly connected, said first linear segment (121) is adapted to be forced between the portion (110) with bending and the linear portion (113) of said first element (11).

2. A dissipative device (1) according to claim 1, **characterized in that** the portion (110) with bending of the first element (11) comprises a first bending (111), a second bending (112) and a third bending (102), said second bending (112) is adapted to rest on the first linear segment (121) of the second element (12) creating a clamping effect adapted to brake the sliding of said second element (12) within the first element (11).

3. A dissipative device (1) according to any one of the preceding claims, **characterized in that** the first and second elements (11, 12) comprise at least two through holes (100) adapted to allow each element (11, 12) to be anchored to at least one covering element (2) by means of fastening means (10) adapted to be inserted into said through holes (100).

4. A dissipative device (1) according to any of the preceding claims 2-3, **characterized in that** the first linear segment (121) of the second element (12) is rectilinear in shape comprising a first flat end (124) and a second end (123) with pointed tapered section, said second end (123) with pointed tapered section is adapted to be inserted into an opening (114) of the first element (11) and lift the portion (110) with bending coming into contact with the second bending (112) of the first element of the portion (110) with bending.

5. A dissipative deformable panel for diaphragms or seismic-resistant walls of buildings comprising at least one deformable portion (40), **characterized in that** said deformable portion (40) comprises at least one dissipative device (1) according to any one of claims 1-4.

## Patentansprüche

1. Antiseismische Ableitungsvorrichtung (1) mit einem ersten Element (11) und einem zweiten Element (12), die an Strukturelementen (2) eines Gebäudes befestigt werden können,
wobei die Strukturelemente (2) einander benachbart sind und nach Maßgabe einer Ausrichtungsebene (O) ausgerichtet sind, entlang der sie sich zwangsläufig bewegen,
wobei das erste Element (11) verformbar ist,
wobei das zweite Element (12) dazu ausgebildet ist, während des Montagevorgangs in dem ersten Element (11) eingeklemmt zu werden, so dass Reibung zwischen den beiden Elementen (11, 12) der Vorrichtung (1) erzeugt wird, wobei die Reibung von der Verformung des ersten Elements (11) der Vorrichtung (1) während des Montagevorgangs abhängt,
wobei das zweite Element (12) ferner dazu ausgebildet ist, mit Bremsreibung in dem ersten Element (11) parallel zu der Ausrichtungsebene (O) zu gleiten, wenn Bewegungen der Strukturelemente (2), an denen die Elemente befestigt sind, in der Ausrichtungsebene (O) stattfinden,
**dadurch gekennzeichnet, dass** das erste Element (11) einen linearen Bereich (113) und einen Bereich (110) mit Biegung aufweist, der kalibrierte Reibung erzeugen kann, dass das zweite Element (12) ein erstes und ein zweites lineares Segment (121, 122) aufweist, die zueinander parallel und starr miteinander verbunden sind, und dass das erste lineare Segment (121) dazu ausgebildet ist, zwischen dem Bereich (110) mit Biegung und dem linearen Bereich (113) des ersten Elements (11) eingeklemmt zu werden.

2. Ableitungsvorrichtung (1) nach Anspruch 1,
**dadurch gekennzeichnet, dass** der Bereich (110) mit Biegung des ersten Elements (11) eine erste Biegung (111), eine zweite Biegung (112) und eine dritte Biegung (102) aufweist, wobei die zweite Biegung (112) dazu ausgebildet ist, auf dem ersten linearen Segment (121) des zweiten Elements (12) aufzuliegen, wodurch eine Klemmwirkung erzeugt wird, die dazu ausgebildet ist, das Gleiten des zweiten Elements (12) innerhalb des ersten Elements (11) abzubremsen.

3. Ableitungsvorrichtung (1) nach einem der vorhergehenden Ansprüche,
**dadurch gekennzeichnet, dass** das erste und das zweite Element (11, 12) mindestens zwei Durchgangsöffnungen (100) aufweisen, die die Verankerung des jeweiligen Elements (11, 12) an mindestens einem Abdeckelement (2) mittels Befestigungsmitteln (10) ermöglichen, die in die Durchgangsöffnungen (100) eingeführt werden können.

4. Ableitungsvorrichtung (1) nach einem der vorhergehenden Ansprüche 2 bis 3,
**dadurch gekennzeichnet, dass** das erste lineare Segment (121) des zweiten Elements (12) eine geradlinige Form hat und ein erstes flaches Ende (124) und ein zweites Ende (123) mit einem spitz zulaufenden Bereich aufweist, wobei das zweite Ende (123) mit dem spitz zulaufenden Bereich dazu ausgebildet ist, in eine Öffnung (114) des ersten Elements (11) eingeführt zu werden und den Bereich (110) mit Biegung anzuheben, der mit der zweiten Biegung (112) des ersten Elements des Bereichs (110) mit Biegung in Kontakt kommt.

5. Ableitendes verformbares Paneel für Membranen oder erdbebensichere Gebäudewände, mit mindestens einem verformbaren Bereich (40),
**dadurch gekennzeichnet, dass** der verformbare Bereich (40) mindestens eine Ableitungsvorrichtung (1) nach einem der Ansprüche 1 bis 4 aufweist.

## Revendications

1. Dispositif dissipatif antisismique (1) comprenant un premier élément (11) et un second élément (12) pouvant être fixés aux éléments structurels (2) d'une construction,
lesdits éléments structurels (2) étant adjacents et alignés selon un plan d'alignement (0) le long duquel ils sont liés pour se déplacer,
ledit premier élément (11) étant déformable,
ledit second élément (12) étant adapté pour être forcé pendant l'étape de montage à l'intérieur dudit premier élément (11) générant une friction entre les deux éléments (11, 12) du dispositif (1), ladite friction dépendant de la déformation du premier élément (11) du dispositif (1) pendant l'étape de montage,
ledit second élément (12) étant de plus adapté pour glisser avec un frottement de freinage dans ledit premier élément (11) parallèlement audit plan d'alignement (0) dans le cas de mouvements dans le plan d'alignement (0) des éléments structurels (2) auxquels ils sont fixés,
**caractérisé en ce que** le premier élément (11) comprend une portion linéaire (113) et une portion (110) avec une courbure apte à générer un frottement calibré, le second élément (12) comprend un premier et un second segment linéaires (121, 122) parallèles l'un à l'autre et connectés de manière rigide, ledit premier segment linéaire (121) est adapté pour être forcé entre la portion (110) avec courbure et la portion linéaire (113) dudit premier élément (11).

2. Dispositif dissipatif (1) selon la revendication 1, **caractérisé en ce que** la portion (110) avec courbure du premier élément (11) comprend une première courbure (111), une seconde courbure (112) et une troisième courbure (102), ladite seconde courbure (112) est adaptée pour rester sur le premier segment linéaire (121) du second élément (12) créant un effet de serrage adapté pour freiner le glissement dudit second élément (12) à l'intérieur du premier élément (11).

3. Dispositif dissipatif (1) selon l'une quelconque des revendications précédentes, **caractérisé en ce que** les premier et second éléments (11, 12) comprennent au moins deux perforations traversantes (100) adaptées pour permettre à chaque élément (11, 12) d'être ancré à au moins un élément de couverture (2) à l'aide d'un moyen de fixation (10) adapté pour être inséré dans lesdites perforations traversantes (100).

4. Dispositif dissipatif (1) selon l'une quelconque des revendications 2-3 précédentes, **caractérisé en ce que** le premier segment linéaire (121) du second élément (12) est de forme rectilinéaire comprenant une première extrémité plane (124) et une seconde extrémité (123) avec une section effilée pointue, ladite seconde extrémité (123) avec une section effilée pointue est adaptée pour être insérée dans une ouverture (114) du premier élément (11) et lever la portion (110) avec une courbure entrant en contact avec la seconde courbure (112) du premier élément de la portion (110) avec courbure.

5. Panneau déformable dissipatif pour diaphragmes ou parois résistant aux forces sismiques de constructions comprenant au moins une portion déformable (40), **caractérisé en ce que** ladite portion déformable (40) comprend au moins un dispositif dissipatif (1) selon l'une quelconque des revendications 1-4.
